# EUROPEAN PATENT SPECIFICATION

(11) **EP 0 811 670 B1**
(45) Date of publication and mention of the grant of the patent: **31.05.2006**
(21) Application number: 97106576.8
(22) Date of filing: 21.04.1997
(51) Int. Cl.: C09K 5/04

(54) **Ternary mixture refrigerant and heat pump apparatus utilizing the same**
Ternäre Kältemittelmischung und Wärmepumpengerät, das diese Mischung verwendet
Mélange réfrigérant ternaire et appareil de pompe à chaleur l'utilisant

(30) Priority: 05.06.1996 JP 14305696
(43) Date of publication of application: 10.12.1997
(73) Proprietor: MATSUSHITA ELECTRIC INDUSTRIAL CO., LTD., Kadoma-shi, Osaka-fu, 571 (JP)
(72) Inventor: Yoshida, Yuji, Itami City, 664 (JP); Funakura, Masami, Neyagawa City, 572 (JP); Okaza, Noriho, Tsuzuki-gun, Kyoto Pref., 610-03 (JP)
(74) Representative: Schirdewahn, Jürgen

(56) References cited:
- EP-A- 0 430 169
- EP-A- 0 451 692
- EP-A- 0 509 673
- WO-A-92/11339
- DATABASE WPI Section Ch, Week 9441 Derwent Publications Ltd., London, GB; Class E16, AN 94-330370 XP002039438 & JP 06 256 757 A (DAIKIN KOGYO KK) , 13 September 1994

## Description

### BACKGROUND OF THE INVENTION

The present invention relates to a ternary mixture refrigerant which can be used as a substitute for chlorodifluoromethane and a heat pump apparatus utilizing the same.

Conventional heat pump apparatuses in air conditioners, freezers, refrigerators and the like comprise a power refrigerating cycle formed by connecting a compressor, a condenser, a squeezing device such as capillary tube, expansion valve or the like, and an evaporator or the like together through pipe lines, and perform a cooling operation or a heating operation by circulating a refrigerant or working fluid through the connected components and pipe lines. The above-mentioned refrigerating cycle may include a four-way valve or cock. In these heat pump apparatuses, halogenated hydrocarbons derived from methane or ethane (hereinafter referred to as R-- or R---, as stipulated in the U.S. ASHRAE 34 Standard of the United States) are usually used as their refrigerants or working fluids. Among them, chlorodifluoromethane (CHClF₂, R22, b.p. -40.8°C) has been widely used as a refrigerant in a refrigerating system such as air conditioner, freezer, refrigerator and the like.

However, depletion of the ozone layer in the stratosphere with chlorofluorohydrocarbons is seriously discussed as one of the global environmental problems in recent years, and the usage and volume of production of some chlorofluorohydrocarbons which have high ozone depletion potential are limited by the Montreal Protocol. In future, their use and production will be completely banned. In order to substantially obviate the influence on the ozone layer in the stratosphere, it is an essential requirement for the refrigerant to contain no chlorine atom in its molecular structure. As one having a possibility of obviating the influence on the ozone layer in the stratosphere, fluorohydrocarbons containing no chlorine (HFCs) are proposed. Fluorohydrocarbons containing no chlorine may be exemplified as difluoromethane (CH₂F₂, R32, b.p. -52°C), pentafluoroethane (CF₃-CHF₂, R125, b.p. -48°C), 1,1,1-trifluoroethane (CF₃-CH₃, R143a, b.p. -48°C), 1,1,1,2-tetrafluoroethane (CF₃-CH₂F, R134a, b.p. -27°C), 1.1-difluoroethane (CHF₂-CH₃, R152a, b.p. -25°C), and the like.

In addition to this problem, the refrigerants of fluorohydrocarbons have another serious environmental problem of global warming and are regarded as having global warming potential (hereinafter referred to as "GWP") indicating the influence on the global warming of the same degree as R22. According to the report on IPCC (Intergovernmental Panel on Climate Change) in 1994 which defines the GWP of carbon dioxide (CO₂) as 1, it is estimated that relative values of GWP of R22 are 4300, 1700 and 520 for 20 years, 100 years, and 500 years, respectively; and with the fluorinated hydrocarbons containing no chlorine, the corresponding relative values for R32 are 1800, 580 and 180; the corresponding relative values for R125 are 4800, 3200 and 1100; the corresponding relative values for R143a are 5200, 4400 and 1600; the corresponding relative values for R134a are 3300, 1300 and 420; and the corresponding relative values for R152a are 460, 140 and 44, respectively.

Among the fluorinated hydrocarbons containing no chlorine, R32, R125 and R143a have a lower boiling point than that of R22 and thus raise the condensing pressure in the heat pump apparatus very high, and thus it is difficult to use them singly as a substitute for R22. Since R134a and R152a have a higher boiling point than that of R22 and lower the refrigerating capacity of the heat pump apparatus, it is also difficult to use them singly as a substitute for R22. In addition, R32, R143a and R152a have a disadvantage that they are flammable.

In order to overcome the disadvantage, a binary mixture refrigerant comprising R32/R125 or a ternary mixture refrigerant comprising R32/R125/R134a has been proposed as a promising substitute for R22. U.S. Patent No. 4,978,467 discloses that the binary mixture refrigerant comprising R32/R125 acts as an azeotropic mixture refrigerant. Since the disclosed mixture refrigerant has a high vapor pressure, it is difficult to apply the refrigerant as it is to the heat pump apparatus which has been operated with R22.

For this reason, the ternary mixture refrigerant comprising R32/R125/R134a which has a vapor pressure of the same degree as that of R22 is disclosed in U.S. Patent No. 5,370,811, U.S. Patent No. 5,185,094, EP A 451,692 and EP A 509,673 as a promising refrigerant. In addition, a composition of R32/R125/R134a of 23/25/52 wt% is proposed [Request for Refrigerant Safety Classification and Nomenclature for Zeotropic Ternary Refrigerant Mixture: HFC-32/HFC-125/HFC-134a, by E.I. du Pont de Nemours and Company, Wilmington, Del., U.S.A., applied on May 18, 1994]. The composition of R32/R125/R134a of 23/25/52 wt% is numbered R407C in the U.S. ASHRAE 34 Standard.

The above-mentioned ternary mixture refrigerant is however a non-azeotropic mixture refrigerant and its boiling point differs from its dew point. In addition, the refrigerant shows a temperature gradient in the condenser or the evaporator. Namely, the temperature of the mixture refrigerant lowers by its temperature gradient as the refrigerant is condensed in the condenser and the temperature of the refrigerant rises by its temperature gradient as it is evaporated in the evaporator. Therefore, low boiling point components such as R32 and R125 are liable to be concentrated in the vapor phase whereas a high boiling point component such as R134a in the liquid phase. In addition, since the mixture refregerant is prepared by blending a plurality of components, it is necessary to specify an error in the proportion of the respective components as a definite composition error. For that reason, a further research will be required for clarifying what composition will give a suitable refrigerant for the heat pump apparatus.

Summaries of the prior art literature which disclose the above-mentioned ternary mixture refrigerant are as follows.

U.S. Patent No. 5,370,811 which is a senior application by some of the inventors of the present invention specifies a composition range of the ternary mixture refrigerant comprising R32/R125/R134s wherein the mixture can demonstrate a substantially equal vapor pressure to that of R22.

U.S. Patent No. 5,185,094 discloses characteristics of the refrigerant in terms of coefficient of performance and refrigerating capacity obtained by using this ternary mixture refrigerant for a heat pump apparatus, and a change in the composition resulting from repeated leakages as a non-azeotropic mixture refrigerant.

EP A 451,692 discloses in Example 3 a general tendency of the coefficient of performance and refrigerating capacity during the application of this ternary mixture refrigerant to a heat pump apparatus, and outlines the nonflammable range of the composition.

Similarly, EP A 509,673 discloses some examples of the coefficient of performance and refrigerating capacity during the application of this ternary mixture refrigerant to a heat pump apparatus. In addition, in Attachment 2, Exhibit 7 of the above-mentioned Request by E.I. du Pont, there is disclosed a most recently published nonflammable range of this R32/R125/R134a.

Based on the above disclosures of the prior art literature, although it is possible to analogize a suitable composition range of this R32/R125/R134a, it is not clarified which composition is actually preferable as the refrigerant of the heat pump apparatus.

In addition, relative values of GWP of the promising composition of R32/R125/R134a of 23/25/52 wt% (R407C), calculated by defining the GWP of carbon dioxide (CO₂) as 1, are estimated to be 3300, 1600 and 530, for 20 years, 100 years and 500 years, respectively. The values are smaller than those of R22 as GWPs for 20 years and 100 years but have a possibility of becoming larger than that of R22 if compared for a long span of 500 years. From this point of view, it is desired to propose a more promising new composition.

### BRIEF SUMMARY OF THE INVENTION

The present invention proposes a heat pump apparatus which utilizes a further restricted composition range of a ternary mixture refrigerant comprising R32/R125/R134a on the basis of a detailed experimental study using a heat pump apparatus which utilizes air as its heat source and various investigations based on the most recently published nonflammable range of R32/R125/R134a.

The object of the present invention is a heat pump apparatus which utilizes a ternary mixture refrigerant which is more suitable for a working fluid for the heat pump apparatus and has substantially equal refrigerating capacity and higher coefficient of performance compared with the promising composition of 23/25/52 wt% (R4O7C).

Another object of the present invention is the use of a ternary mixture refrigerant in a refrigerant cycle of a heat pump apparatus which is nonflammable even in the vapor phase composition in addition to the liquid phase composition and has lower GWP compared with R407C.

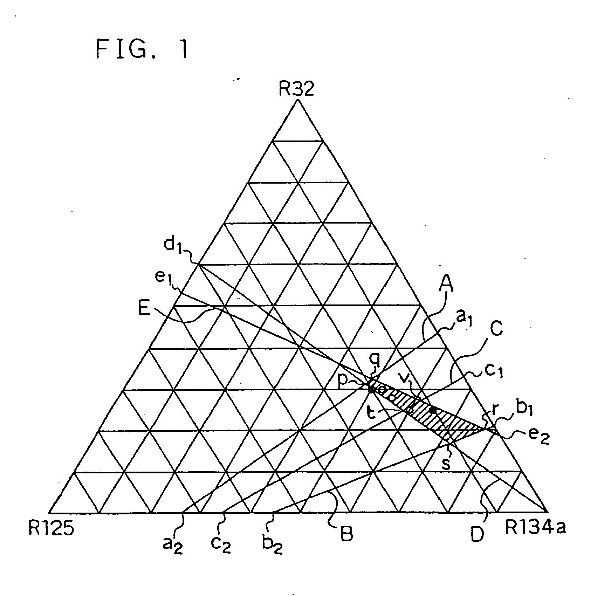

The mixture refrigerant in accordance with the present invention comprising R32/R125/R134a is in a composition range defined by a straight line A which connects a point a₁ (R32/R134a = 43/57 wt%) and a point a₂ (R125/R134a = 73/27 wt%), a line C which connects a point C₁ (R32/R134a = 33/67 wt%) and a point C₂ (R125/R134a = 65/35 wt%), a line D which connects a point d₁ (R32/R125 = 60/40 wt%) and a vertex of R134a, and a line E which connects a point e₁ (R32/R125 = 53/47 wt%) and a point e₂ (R32/R134a = 19/81 wt%) in a ternary composition diagram represented by a triangular coordinate in FIG. 1 .

In the triangular coordinate, which is depicted by disposing R32, R125 and R134a at the respective vertexes of a triangle in the counterclockwise direction from the top vertex, single components are assigned on the vertexes from a compound having the lowest boiling point to one having the highest boiling point. A composition (ratio by weight) of the three compounds at one point on the triangular coordinate is expressed by a ratio of distances between the point and the opposite sides. The distance between the point and the opposite side corresponds to a proportion of the compound which is assigned on the vertex which faces the side.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

FIG. 1 is a composition diagram represented by a triangular coordinate for describing the composition of the ternary mixture refrigerant comprising R32/R125/R134a in accordance with the present invention.

FIG. 2 is a diagram showing a relationship between percent by weight of R32 in a binary mixture refrigerant comprising R32/R125 and saturation temperature gradient.

FIG. 3 is a schematic diagram showing the refrigerating cycle in the heat pump apparatus which utilizes the mixture refrigerant in accordance with the present invention.

FIG. 4 is a composition diagram represented by a triangular coordinate for describing the nonflammable region of the ternary mixture refrigerant comprising R32/R125/R134a in accordance with the present invention.

### DETAILED DESCRIPTION OF THE INVENTION

The ternary mixture refrigerant in accordance with the present invention is in the composition range defined by lines A, C, D and E, namely a hatched area of a quadrilateral formed by connecting vertexes of points p, q, t and v, in the ternary composition diagram represented by the triangular coordinate in FIG. 1. The points p and q are the intersecting points at which the line A intersects the lines D and E, respectively, and the points t and v are the intersecting points at which the line C intersects the lines D and E, respectively. In FIG. 1, the compositions of the five specific examples of the mixture refrigerant in accordance with the present invention, namely, the mixture refrigerants Nos. 3, 2 and 9 in the specific examples which will be described below are indicated by white circles in turn from the left side of the diagram.

The heat pump apparatus in accordance with the present invention has a power refrigerating cycle which utilizes the above-mentioned ternary mixture refrigerant as a working fluid. In particular, a refrigerating cycle comprising a compressor driven by an inverter unit is suitable.

Of the mixture refrigerant of R32/R125/R134a, compositions in a region between the line A and the line B have a vapor pressure which is substantially equal to that of R22 and thus have substantially equal refrigerating capacity. Compositions containing R32 in a larger quantity than those on the line D have a higher coefficient of performance than that of the composition of R32/R125/R134a = 23/25/52 wt% (R407C). In compositions containing R32 in a smaller quantity than those on the line E, it is believed that not only a liquid phase composition but also its equilibrium vapor phase composition are nonflammable even if the composition at room temperature is placed in an atmospheric temperature at 100°C. In addition, since the mixture refrigerants of R32/R125/R134a in this composition range contain a smaller proportion of R125 which has a high GWP as compared with R407C, it is possible to lower their GWPs.

Among the compositions in the quadrilateral formed by connecting the vertexes of the points p, q, r and s, compositions in the region between a line C connecting a point c₁ (R32/R134a = 33/67 wt%) and a point c₂ (R125/R134a = 65/35 wt%) and the line A, i.e. the compositions according to the invention in the quadrilateral formed by connecting the vertexes of the points p, q, t and v, have larger refrigerating capacity than that of R407C, and thus are preferable for improving the coefficient of performance in the heat pump apparatus comprising a compressor driven by an inverter unit in both the cooling mode and heating mode operations. This ambi-utility heat pump apparatus is preferably used in a household air conditioner or the like.

In the following paragraphs, specific examples of the present invention will be described.

### EXAMPLE 1

Table 1 and Table 2 below show ideal refrigerating capacity of some specific examples of mixture refrigerants comprising R32/R125/R134a in accordance with the present invention together with those of mixture refrigerants of some comparative examples. The performance was measured under conditions of an average condensing temperature of 50°C, an average evaporating temperature of 0°C, a degree of supercool of 0 deg at an outlet of the condenser and a degree of superheat of 0 deg at an outlet of the evaporator. The refrigerants Nos.2, 3 and 9 are specific examples of the present invention and the other refrigerants are comparative examples.

**Table 1**

| Refrigerant No. | 1 | 2 | 3 | 4 | 5 |
|---|---|---|---|---|---|
| Composition R32 | 23 | 28 | 30 | 30 | 33 |
| (wt%) R125 | 25 | 17 | 18 | 20 | 17 |
| R134a | 52 | 55 | 52 | 50 | 50 |
| Refrigerating capacity (Ratio to R407C) | 1.000 | 1.031 | 1.059 | 1.065 | 1.090 |
| Coefficient of performance (Ratio to R407C) | 1.000 | 1.012 | 1.010 | 1.007 | 1.013 |
| Condensing pressure (MPa) | 2.091 | 2.108 | 2.161 | 2.185 | 2.212 |
| Evaporating pressure (MPa) | 0.495 | 0.498 | 0.513 | 0.520 | 0.528 |
| Discharge temperature (°C) | 67.29 | 69.81 | 70.57 | 70.39 | 71.70 |
| Condensing temperature gradient (deg) | 4.74 | 4.94 | 4.86 | 4.78 | 4.80 |
| Evaporating temperature gradient (deg) | 4.24 | 4.43 | 4.44 | 4.40 | 4.45 |

As listed in Table 1 above, the refrigerants No. 2 through No.5 have slightly higher condensing pressure, evaporating pressure and discharge temperature, compared with those of R 407C (R32/R125/R134a = 23/25/52 wt%), because the proportion of R32 having a higher vapor pressure than that of R22 is large, but both their refrigerating capacity and coefficient of performance are more favorable than those of R407C.

**Table 2**

| Refrigerant No. | 6 | 7 | 8 | 9 | 10 |
|---|---|---|---|---|---|
| Composition R32 | 30 | 30 | 25 | 25 | 25 |
| (wt%) R125 | 0 | 10 | 20 | 15 | 10 |
| R134a | 70 | 60 | 55 | 60 | 65 |
| Refrigerating capacity (Ratio to R407C) | 0.989 | 1.027 | 1.006 | 0.987 | 0.969 |
| Coefficient of performance (Ratio to R407C) | 1.045 | 1.029 | 1.008 | 1.022 | 1.028 |
| Condensing pressure (MPa) | 1.965 | 2.071 | 2.077 | 2.022 | 1.968 |
| Evaporating pressure (MPa) | 0.455 | 0.486 | 0.490 | 0.473 | 0.457 |
| Discharge temperature (°C) | 71.30 | 70.84 | 68.39 | 68.51 | 68.80 |
| Condensing temperature gradient (deq) | 5.22 | 5.10 | 4.88 | 5.00 | 5.08 |
| Evaporating temperature gradient (deg) | 4.46 | 4.52 | 4.34 | 4.36 | 4.33 |

As listed in Table 2 above, the refrigerants No. 6 through No.10 have slightly lower condensing pressure and evaporating pressure, compared with those of R407C, because the proportion of R125 having a higher vapor pressure than that of R22 is small, and their refrigerating capacity remains substantially equal to that of R407C but their coefficients of performance are more favorable than that of R407C.

In this context, the compositions of the refrigerants No.2 through No.5 and the compositions of the refrigerants No.6 through No.10 are classified into two regions as follows. In the triangular coordinate representing the composition of the mixture refrigerant comprising R32/R125/R134a of the above-mentioned U.S. Patent No. 5,370,811, three lines are depicted: namely, a saturated vapor phase line of the mixture refrigerant which coincides with the saturation pressure of R22 at 0°C, a saturated vapor phase line of the mixture refrigerant which coincides with the saturation pressure of R22 at 50°C, and a saturated liquid phase line of the mixture refrigerant which coincides with the saturation pressure of R22 at 50°C (which also substantially coincides with a saturated liquid phase line at the saturation pressure of R22 at 0°C).

The position of the composition on the saturated vapor phase line of the mixture refrigerant which coincides with the saturation pressure of R22 at 50°C is substantially midway in a region between the saturated liquid phase line and the saturated vapor phase line of the mixture refrigerant which coincides with the saturation pressure of R22 at 0°C. For that reason, at the same pressure as that of R22, the mixture refrigerant has a boiling point lower than 0°C and a dew point higher than 0°C, and demonstrates an average evaporation temperature of 0°C when it is utilized as a working fluid in a heat pump apparatus.

Since it is known that the refrigerating capacity of a refrigerant is substantially proportional to its evaporation temperature, it is appreciated that the refrigerating capacity of a composition which is on the saturated vapor phase line of the mixture refrigerant, which coincides with the saturation pressure of R22 at 50°C, is in substantial agreement with the refrigerating capacity of R22. That is, the compositions of the refrigerants No. 2 through No.5 and the compositions of the refrigerants No. 6 through No.10 are classified into two regions by taking the saturated vapor phase line of the mixture refrigerant which coincides with the saturation pressure of R22 at 50°C as borderline, and the composition of 23/25/52 wt% (R407C) is substantially on this borderline.

And, the refrigerating capacity of the refrigerants No.2 through No.5 having a larger proportion of R32 than that of the composition on this borderline is larger than that of R407C. In addition, the refrigerating capacity of the refrigerants No.6 through No.10 which are on this borderline or have a smaller proportion of R32 than that of the composition on this borderline is substantially the same as or smaller than that of R407C. These facts are clearly seem from Table 1 and Table 2.

That is, among the composition ranges specified by U.S. Patent No. 5,370,811, the saturated vapor phase line of the mixture refrigerant which coincides with the saturation pressure of R22 at 0°C approximates to the line A which connects the point a₁ (R32/R134a = 43/57 wt%) and the point a₂ (R125/R134a = 73/27 wt%). The saturated liquid phase line of the mixture refrigerant which coincides with the saturation pressure of R22 at 50°C approximates to the line B which connects the point b₁ (R32/R134a = 21/79 wt%) and the point b₂ (R125/R134a = 55/45 wt%). In addition, the saturated vapor phase line of the mixture refrigerant positioned substantially midway which coincides with the saturation pressure of R22 at 50°C approximates to the line C which connects the point c₁ (R32/R134a = 33/67 wt%) and the point c₂ (R125/R134a = 65/35 wt%). For that reason, the compositions No.2 through No.5 are substantially in a region between the line A and the line C, and their refrigerating capacity increases more than that of R407C. In addition, the compositions of the refrigerants No.6 through No.10 are substantially in a region between the line C and the line B, and their refrigerating capacity is substantially the same as or decreases lower than that of R407C.

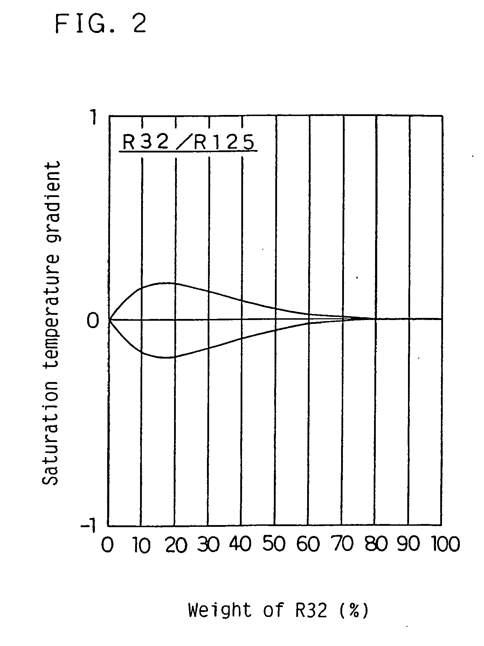

In addition, the composition of the ternary mixture refrigerant comprising R32/R125/R134a as discussed above is a combination of a binary azeotropic mixture refrigerant comprising R32/R125 and R134a, and a temperature gradient of the binary azeotropic mixture refrigerant comprising R32/R125 at an average saturation temperature of 0°C shown by the diagram in FIG. 2 is obtained. From FIG. 2, it is appreciated that the composition of 23/25/52 wt% (R407C) is a combination of a mixture refrigerant of R32/R125 (48/52 wt%) having non-azeotropic property and R134a. By contrast, it is appreciated that the compositions of the refrigerant No. 2 through No. 10 which demonstrate favorable coefficient of performance have a larger proportion of R32 than those on the line D which connects the point of R32/R125 (60/40 wt%) and the vertex for R134a, and are a combination of the mixture refrigerant comprising R32/R125 which can be handled almost as a single refrigerant and R134a.

On the basis of the above discussion, a more restricted suitable composition range has been classified. In the case of applying a mixture refrigerant having a condensing temperature gradient and an evaporation temperature gradient to a practical heat pump apparatus, an actual condensing temperature gradient in a condenser becomes larger by a pressure loss than the condensing temperature gradient shown in Table 1 and Table 2, and an actual evaporating temperature gradient in an evaporator becomes smaller by a pressure loss than the evaporating temperature gradient shown in Table 1 and Table 2. For that reason, the operation temperature of the refrigerating cycle changes from the data shown in Table 1 and Table 2, and thus it is necessary to grasp the actual characteristics of the refrigerants in the practical heat pump apparatus.

### EXAMPLE 2

A description will be made on an example wherein some specific examples of the ternary mixture refrigerant in accordance with the present invention are applied to a heat pump apparatus utilizing air as its heat source.

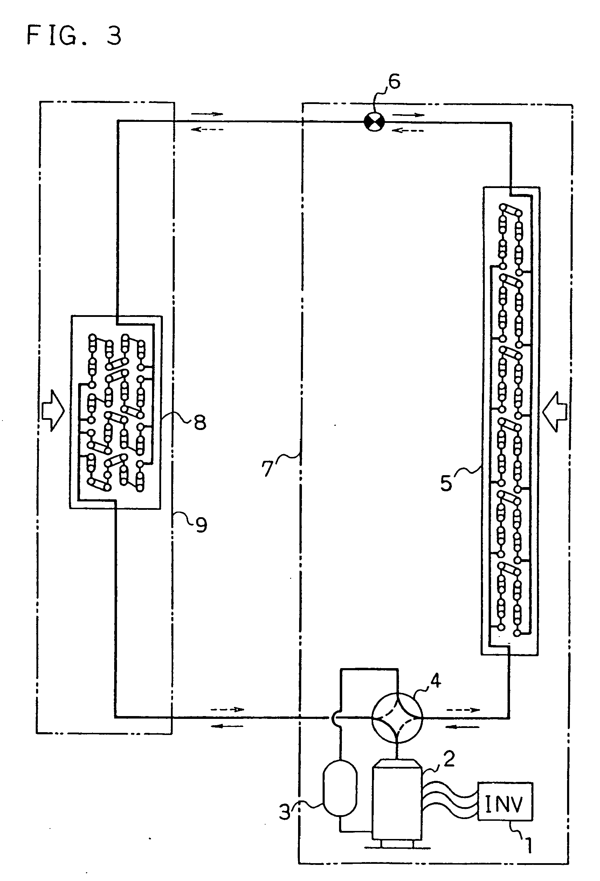

The air-heat source heat pump apparatus shown by FIG. 3 comprises a refrigerating cycle configured by connecting a compressor 2 driven by an inverter unit 1, an accumulator 3, a four-way valve 4, an outdoor unit 7 including an outdoor heat transfer unit 5 which acts as a condenser or an evaporator and an expansion valve 6, and an indoor unit 9 including an indoor heat transfer unit 8 which acts as a condenser or an evaporator, together with pipe lines. The ternary mixture refrigerant is injected into this refrigerating cycle as a working fluid and sealed, and an oil of an ester which is suited for the fluorohydrocarbons containing no chlorine is injected into the compressor 1 and sealed.

In this refrigerating cycle, the refrigerant circulates in the direction of dashed arrows during the cooling mode operation and in the direction of the solid arrows during the heating mode operation. The outdoor heat transfer unit 5 is an air-cooled heat transfer unit having two rows of 6 paths and the indoor heat transfer unit 8 is an air-cooled heat transfer unit having four rows of four paths, and the flow of the refrigerant is designed to be a counter flow against the air flow during the cooling mode operation.

Table 3 summarizes characteristics of the previously described mixture refrigerants No. 1 through No.10 comprising R32/R125/R134a when they are utilized in the heat pump apparatus shown by FIG. 3 during cooling mode and heating mode operations. The disclosed characteristics are obtained by adjusting the charging amounts of the mixture refrigerant and the openings of the expansion valve 6 so as to maximize the coefficients of performance. The disclosed characteristics are represented by the coefficient of performance measured by taking the value for R407C as reference and finely adjusting the rotational frequency of the compressor 2 driven by the inverter unit 1 so as to correct fine differences in capacity shown in Table 1 and Table 2 and make the capacity equal.

**Table 3**

| Refrigerant No. | 1 | 2 | 3 | 4 | 5 |
|---|---|---|---|---|---|
| COP in cooling mode (Ratio to R407C) | 1.000 | 1.075 | 1.076 | 1.084 | 1.049 |
| COP in heating mode (Ratio to R407C) | 1.000 | 1.026 | 1.051 | 1.075 | 1.042 |

| Refrigerant No. | 6 | 7 | 8 | 9 | 10 |
|---|---|---|---|---|---|
| COP in cooling mode (Ratio to R407C) | 1.041 | 1.068 | 1.024 | 1.036 | 1.041 |
| COP in heating mode (Ratio to R407C) | 0.996 | 1.007 | 0.995 | 0.998 | 1.021 |

| | | | | | |
|---|---|---|---|---|---|
| COP: coefficient of performance | | | | | |

As clearly appreciated from Table 3 above, coefficients of performance of the mixture refrigerants No.2 through No.5 during both the cooling and heating mode operations are greatly improved, compared with the ideal coefficients of performance shown in Table 1, because their increasing performance compared with that of R407C is made to be the same by finely adjusting the rotational frequency of the compressor 2 in the direction of decreasing the frequency by the inverter unit 1.

In addition, with the mixture refrigerants No.6 through No.10, their coefficients of performance during the cooling mode operation are also greatly improved compared with the ideal coefficients of performance shown in Table 2 and increased compared with that of R407C. During the heating mode operation, however, only substantially the same coefficients of performance as that of R407C can be expected with the mixture refrigerants, because the decreased performance is made to be the same by finely adjusting the rotational frequency of the compressor 2 by the inverter unit 1 to the same or in the direction of increasing the frequency.

In particular, it is appreciated that, among the tested mixture refrigerants shown in Table 3, the refrigerants whose coefficients of performance during the cooling mode operation are greatly improved compared with their ideal values are those of the compositions having a larger proportion of R32 than those substantially on the line D, i.e., the refrigerants No.2 through No.5, and No.7 through No.10. In addition, among the tested mixture refrigerants shown in Table 3, with the refrigerants whose coefficients of performance during the cooling mode operation are greatly improved compared with their ideal values and whose refrigerating capacity is increased, the effects of decreased condensing pressure, increased evaporating pressure and decreased compression ratio are great. The ideal evaporation temperature gradients listed in Table 1 and Table 2 are larger than those of R407C. These facts are suited for the air-cooled heat transfer unit which is designed to be a counter flow during the cooling mode operation. The disclosed results were first found during the process of the research and development to this invention.

In addition, among the mixture refrigerants No.6 through No.10, since No.9 or No.10 is effective for improving the coefficient of performance during the cooling mode operation and has smaller proportions of R32 and R125 having a high vapor pressure as compared with that of R407C, the condensing pressure can be made low, and thus is suited for the heat pump apparatus mainly for the cooling mode operation. However, if the proportion of R32 is decreased more than that, the refrigerating capacity of the mixture refrigerant decreases as shown in Table 2 and an improvement in the coefficient of performance becomes hard to expect because an input increases in order to make the capacity the same. In addition, all the tested mixture refrigerants shown in Table 3 suggest that small differences of not more than 2 - 5% in the proportions of R32, R125 and R134a to be incorporated in the mixture have an influence on the performance of the heat pump apparatus, and thus it is desirable that the respective components are in the composition error of not more than ±2%.

### EXAMPLE 3

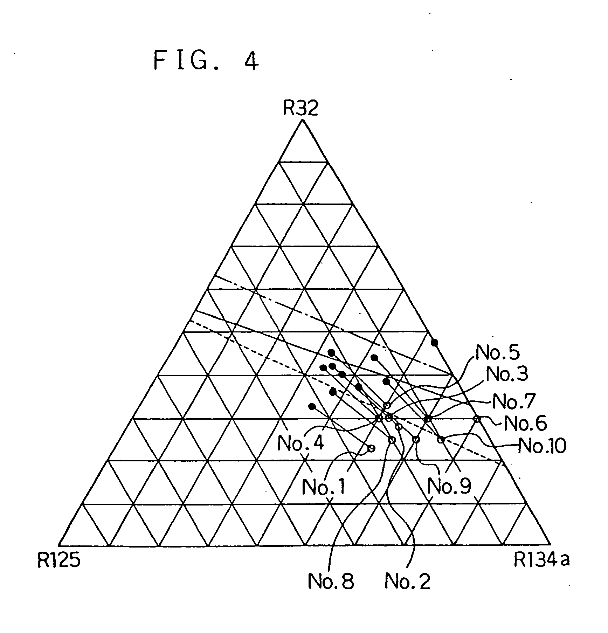

FIG. 4 is a composition diagram of the mixture refrigerant comprising R32/R125/R134a represented by a triangular coordinate. In this figure, each of the white circles indicates the respective compositions of the previously described mixture refrigerants No.1 through No.10, and each of the black circles indicates the respective saturated vapor phase compositions of the respective saturated liquid phases of the compositions indicated by the white circles which are in an equilibrium state at 23°C. Lines connecting the white circles and the black circles are tie lines for indicating that the pairs are in equilibrium state.

In addition, FIG. 4 further incorporates by reference nonflammable borderlines of the composition R32/R125/R134a shown in Attachment 2, Exhibit 7 of the previously described Request for Refrigerant Safety Classification and Nomenclature for Zeotropic Ternary Refrigerant Mixture by E.I. du Pont de Nemours and Company. In this diagram, the solid line indicates a nonflammability borderline at an atmospheric temperature of 100°C and the dot-dashed line indicates a nonflammability borderline at room temperature (about 23°C), respectively. The broken line indicates the saturated liquid phase composition in a state in equilibrium with the saturated vapor phase composition at 23°C which coincides with the solid line.

It is believed that a mixture refrigerant having a smaller proportion of R32 than that on the broken line is nonflammable in both its liquid phase composition and equilibrium vapor phase composition, even if R32 having a flammability is concentrated in its vapor phase and the composition in an environment at room temperature of 23°C is subjected to a flammability test at an atmospheric temperature of 100°C. This nonflammable composition is specified as a composition having a smaller proportion of R32 than that on the line E which connects the point e₁ (R32/R125 = 53/47 wt%) and the point e₂ (R32/R134a = 19/81 wt%). Therefore, it is believed that among the mixture refrigerants which demonstrate favorable coefficient of performance as shown in Table 3, the refrigerants No.1 (R407C), Nos.2 - 4 and Nos.8 - 10 are nonflammable.

By contrast, the mixture refrigerants No.5 through No.7 have a possibility that their vapor phase compositions in equilibrium state with their liquid phase compositions become flammable when the compositions at room temperature such as 23°C are placed at an atmospheric temperature of 100°C, and thus should be excluded. In addition, the composition at an intersecting point r at which the line B intersects the line E shown in Example 1 can reduce the flammability of R32, because the composition contains at least R125 which has a large nonflammable effect.

### EXAMPLE 4

Investigation was made on the global warming potential (GWP) of the ternary mixture refrigerant in accordance with the present invention.

Table 4 summarizes the relative values of GWP of the mixture refrigerants No.1 though No.10 for 20 years, 100 years and 500 years, respectively, calculated by defining GWP of carbon dioxide (CO₂) as 1.

**Table 4**

| Refrigerant No. | 1 | 2 | 3 | 4 | 5 |
|---|---|---|---|---|---|
| GWP of 20 years (Ratio to CO₂) | 3300 | 3100 | 3100 | 3200 | 3100 |
| GWP of 100 years (Ratio to CO₂) | 1600 | 1400 | 1400 | 1500 | 1400 |
| GWP of 500 years (Ratio to CO₂) | 530 | 470 | 470 | 480 | 460 |

| Refrigerant No. | 6 | 7 | 8 | 9 | 10 |
|---|---|---|---|---|---|
| GWP of 20 years (Ratio to CO₂) | 2900 | 3000 | 3200 | 3200 | 3100 |
| GWP of 100 years (Ratio to CO₂) | 1100 | 1300 | 1500 | 1400 | 1300 |
| GWP of 500 years (Ratio to CO₂) | 350 | 420 | 500 | 460 | 430 |

The mixture refrigerants No.2 through No.10 shown above have a small GWP for the entire time periods as compared with R407C having a composition No.1 of 23/25/52 wt% because their proportions of R125 having a high GWP are small. In addition to this, it is possible to make GWP of the mixture refrigerants No.2 through No.10 smaller than that of R22 even if a comparison is made at a long term of 500 years. However, it should be noted here that although the mixture refrigerant No.6 or No.7 has small GWP and is favorable from the viewpoint of only GWP, it may have a possibility of having a flammable property if the proportion of R125 having a large nonflammable effect is too small compared with R32 having a flammable property, as appreciated from the description of Example 3.

As described previously , the mixture refrigerants No.2, No. 3 and, No. 9 specified by Example 1, Example 2 and Example 3 have favorable coefficient of performance, and are considered to be nonflammable, and, in addition, it is possible to lower GWP as compared with the promising R407C.

As described previously, in accordance with the present invention, it is possible to provide a mixture refrigerant having substantially equal refrigerating capacity, high coefficient of performance, low GWP and nonflammable even in its vapor phase composition in addition to its liquid phase composition, compared with the promising composition of 23/25/52 wt% (R407C), by further restricting a composition range of a ternary mixture refrigerant comprising R32/R125/R134a, which has hitherto been proposed as a substitute for R22, more suitably for a working fluid for a heat pump apparatus.

It is understood that various other modifications will be apparent to and can be readily made by those skilled in the art without departing from the present invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which this invention pertains.

## Claims

1. A heat pump apparatus comprising a refrigerating cycle which comprises an inverter unit for driving a compressor and performs both cooling mode and heating mode operations which utilize a ternary mixture,
wherein said ternary mixture refrigerant comprises R32/R125/R134a in a composition range defined by a straight line A which connects a point a1 (R32/R134a=43/57 wt%) and a point a2 (R125/R134a=73/27 wt%), a line C which connects a point c1 (R32/R134a=33/67 wt%) and a point c2 (R125/R134a=65/35 wt%), a line D which connects a point d1 (R32/R125=60/40 wt%) and a vertex of R134a, and a line E which connects a point e1 (R32/R125=53/47 wt%) and a point e2 (R32/R134a=19/81 wt%) in a ternary composition chart of R32, R125 and R134a represented by a triangular coordinate in Fig. 1.

2. Use of a ternary mixture refrigerant comprising R32/R125/R134a in a composition range defined by a straight line A which connects a point a1 (R32/R134a = 43/57 wt%) and a point a2 (R125/R134a = 73/27 wt%), a line C which connects a point c1 (R32/R134a = 33/67 wt%) and a point c2 (R125/R134a = 65/35 wt%), a line D which connects a point d1 (R32/R125 = 60/40 wt%) and a vertex of R134a, and a line E which connects a point e1 (R32/R125 = 53/47 wt%) and a point e2 (R32/R134a = 19/81 wt%) in a ternary composition chart of R32, R125 and R134a represented by a triangular coordinate in FIG.1 as ternary mixture refrigerant in a refrigerating cycle of a heat pump apparatus.

## Patentansprüche

1. Wärmepumpengerät, aufweisend einen Kältekreis, der eine Invertereinheit zum Antreiben eines Verdichters umfasst und der sowohl eine Kühlbetriebsart wie eine Wärmebetriebsart durchführt, welche eine ternäre Mischung nutzen,
wobei die ternäre Kältemittelmischung R32/R125/R134a in einem Zusammensetzungsbereich umfasst, der durch eine gerade Linie A festgelegt ist, welche einen Punkt a1 (R32/R134a=43/57 wt%) mit einem Punkt a2 (R125/R134a=73/27 wt%) verbindet, durch eine Linie C, welche einen Punkt c1 (R32/R134a-33/67wt%) mit einem Punkt c2 (R125/R134a=65/35 wt%) verbindet, durch eine Linie D, welche einen Punkt d1 (R32/R125=60/40 wt%) mit einem Scheitel von R134a verbindet, und mit einer Linie E, welche einen e1 (R32/R125=53/47 wt%) mit einem Punkt e2 (R32/R134a=19/81 wt%) in einem ternären Zusammensetzungsdiagramm von R32, R125 und R124a verbindet, das durch eine dreieckige Koordinate in Fig. 1 dargestellt ist.

2. Verwendung einer ternären Kältemittelmischung, welche R32/R125/R134a in einem Zusammensetzungsbereich umfasst, der durch eine gerade Linie A festgelegt ist, welche einen Punkt a1 (R32/R134a=43/57 wt%) und einen Punkt a2 (R125/R134a=73/27 wt%) verbindet, durch eine Linie C, welche einen Punkt c1 (R32/R134a=33/67 wt%) und einen Punkt c2 (R125/R134a=65/35 wt%) verbindet, durch eine Linie D, welche einen Punkt d1 (R32/R125=60/40 wt%) mit einem Scheitel von R134a verbindet, und durch eine Linie E, welche einen Punkt e1 (R32/R125=53/47 wt%) mit einem Punkt e2 (R32/R134a=19/81 wt%)in einem ternären Zusammensetzungsdiagramm von R32, R125 und R134a verbindet, die durch eine dreieckige Koordinate in Fig. 1 als ternäre Kältemittelmischung in einem Kältekreis eines Wärmepumpengeräts darstellt.

## Revendications

1. Dispositif de pompe à chaleur comprenant un cycle de réfrigération qui comprend une unité d'inverseur destinée à entraîner un compresseur et exécute les opérations de mode de refroidissement et de mode de chauffage qui utilisent un mélange ternaire,
dans lequel ledit réfrigérant à mélange ternaire comprend du R32/R125/R134a dans une plage de composition définie par une ligne droite A qui relie un point a1 (R32/R134a = 43/57 % en poids) et un poids a2 (R125/R134a = 73/27 % en poids), une ligne C qui relie un point c1 (R32/R134a = 33/67 % en poids) et un point c2 (R125/R134a = 65/35 % en poids), une ligne D qui relie un point d1 (R32/R125 = 60/45 % en poids) et un sommet de R134a, et une ligne E qui relie un point e1 (R35/R125 = 53/47 % en poids) et un point e2 (R32/R134a = 19/81 % en poids) dans un graphe de composition ternaire de R32, R125, et R134a représenté par un système de coordonnées triangulaires sur la figure 1.

2. Utilisation d'un réfrigérant à mélange ternaire comprenant du R32/R125/R134a dans une plage de composition définie par une ligne droite A qui relie un point a1 (R32/R134a = 43/57 % en poids) et un point a2 (R125/R134a = 73/27 % en poids), une ligne C qui relie un point c1 (R32/R134a = 33/67 % en poids) et un point c2 (R125/R134a = 65/35 % en poids), une ligne D qui relie un point d1 (R32/R125 = 60/40 % en poids) et un sommet de R134a, et une ligne E qui relie un point e1 (R32/R135 = 53/47 % en poids) et un point e2 (R32/R134a = 19/81 % en poids) dans un graphe de composition ternaire de R32, R125, et R134a représenté par un système de coordonnées triangulaires sur la figure 1 comme étant un réfrigérant de mélange ternaire dans un cycle de réfrigération d'un dispositif de pompe à chaleur.
